**Europäisches Patentamt**

**European Patent Office**

**Office européen des brevets**

(19)

(11) Veröffentlichungsnummer : **0 422 084 B1**

(12) # EUROPÄISCHE PATENTSCHRIFT

(45) Veröffentlichungstag der Patentschrift :
**15.02.95 Patentblatt 95/07**

(51) Int. Cl.⁶ : **F21Q 1/00,** F21M 3/08,
F21V 7/09

(21) Anmeldenummer : **89907662.4**

(22) Anmeldetag : **08.07.89**

(86) Internationale Anmeldenummer :
**PCT/DE89/00454**

(87) Internationale Veröffentlichungsnummer :
**WO 90/10174 07.09.90 Gazette 90/21**

(54) **LEUCHTE, INSBESONDERE FÜR KRAFTFAHRZEUGE.**

(30) Priorität : **24.02.89 DE 3905674**

(43) Veröffentlichungstag der Anmeldung :
**17.04.91 Patentblatt 91/16**

(45) Bekanntmachung des Hinweises auf die
Patenterteilung :
**15.02.95 Patentblatt 95/07**

(84) Benannte Vertragsstaaten :
**DE FR GB IT SE**

(56) Entgegenhaltungen :
**DE-C- 753 691**

(56) Entgegenhaltungen :
**FR-A- 2 528 537**
**GB-A- 1 140 417**
**US-A- 2 913 570**
**US-A- 3 401 258**
**US-A- 4 035 631**

(73) Patentinhaber : **ROBERT BOSCH GMBH**
**Postfach 30 02 20**
**D-70442 Stuttgart (DE)**

(72) Erfinder : **SCHMID, Heinrich**
**Rembrandtstrasse 7**
**D-7440 Nürtingen (DE)**
Erfinder : **SCHMOCK VON OHR, Margret**
**Schopenhauerstrasse 17**
**D-7410 Reutlingen (DE)**

## Beschreibung

Die Erfindung betrifft eine Leuchte, insbesondere für Fahrzeuge, nach der Gattung des Anspruchs 1.

Eine solche Leuchte ist durch die DE-C 753 691 bekannt. Diese Leuchte weist eine Lichtquelle und einen Reflektor auf. Der Reflektor ist von einem durch Drehung einer Kurve um eine optische Achse des Reflektors entstehenden Körper gebildet. Die die Mantellinie des Reflektors bildende Kurve besteht abschnittsweise aus einem Ast einer um einen Winkel um einen vorgegebenen Brennpunkt des Reflektors gedrehten Parabel. Im Scheitelbereich des Reflektors weicht die Kurve von der Parabel ab.

Bei Fahrzeugen üblicherweise verwendete Leuchten weisen einen Reflektor auf, der aus einem Paraboloid gebildet ist, dessen Achse zugleich die optische Achse des Reflektors ist. Um einen zur Erfüllung von gesetzlichen Lichtforderungen erforderlichen großen Raumwinkel zur Lichtabstrahlung zu umfassen und somit einen großen Lichtstrom zu erfassen, werden diese Leuchten mit großem Druchmesser und großer Einbautiefe ausgeführt. Bei Fahrzeugen stehen jedoch aus aerodynamischen und stilistischen Gründen immer kleinere Einbauräume zur Unterbringung der Leuchten zur Verfügung. Mit der Ausbildung des Reflektors der gattungsgemäßen Leuchte wird ein großer Lichtstrom bei zugleich kompakter Bauweise erfasst, jedoch können wegen der starken Lichtstreuung wie sie die gattungsgemäße Leuchte aufweist beim Einsatz der Leuchte in einem Fahrzeug die Lichtforderungen nicht erfüllt werden.

Durch die GB-A 1 140 417 ist außerdem eine Leuchte bekannt, die mehrere Lichtquellen und diesen zugeordnete Reflektorteile aufweist, die als Paraboloide ausgebildet sind und deren optische Achsen zueinander gedreht angeordnet sind. Die Lichtaustrittsöffnung dieser Leuchte ist mit einer lichtlenkenden Scheibe abgedeckt, durch die das von den Reflektorteilen kommende Licht parallel zur Längsachse der Leuchte gerichtet wird. Insgesamt erfordert diese Leuchte wegen der Vielzahl von Lichtquellen einen großen Bauraum und ist daher für den Einsatz in einem Fahrzeug nicht geeignet.

Darüberhinaus ist durch die FR-A 2 528 537 ein Abblendlichtscheinwerfer für Kraftfahrzeuge bekannt, der eine Lichtquelle und einen parabolischen Reflektor aufweist. Außerdem ist eine lichtlenkende Scheibe vorgesehen. Der Reflektor weist einen äußeren Bereich auf, dessen Brennpunkt bezüglich der Lichtquelle entgegen Lichtaustrittsrichtung versetzt angeordnet ist, und einen Scheitelbereich, dessen Brennpunkt näher an der Lichtquelle angeordnet ist. Durch diese Ausbildung des Reflektors soll verhindert werden, daß sich vom Reflektor reflektierte Lichtstrahlen in einem mittleren Bereich der lichtlenkenden Scheibe konzentrieren und dort hohe Temperaturen verursachen, die die Scheibe zerstören könnten.

Die erfindungsgemäße Leuchte mit den Merkmalen des Anspruchs 1 hat gegenüber der gattungsgemäßen Leuchte den Vorteil, daß mit dieser die bei Fahrzeugen bestehenden Lichtforderungen erfüllt werden können und eine zu starke Erwärmung der lichtlenkenden Scheibe in deren mittleren Bereich vermieden ist.

In den abhängigen Ansprüchen sind vorteilhafte Ausgestaltungen und Weiterbildungen der Leuchte angegeben. Durch die Ausbildung gemäß Anspruch 4 ist eine weitere Temperaturabsenkung im mittleren Bereich der Scheibe erreicht.

Zeichnung

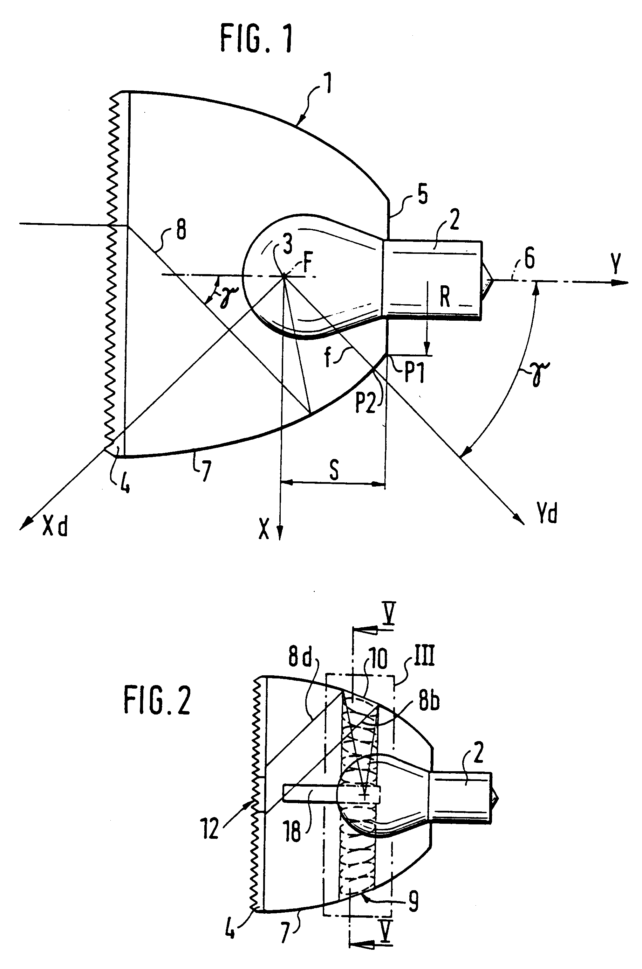

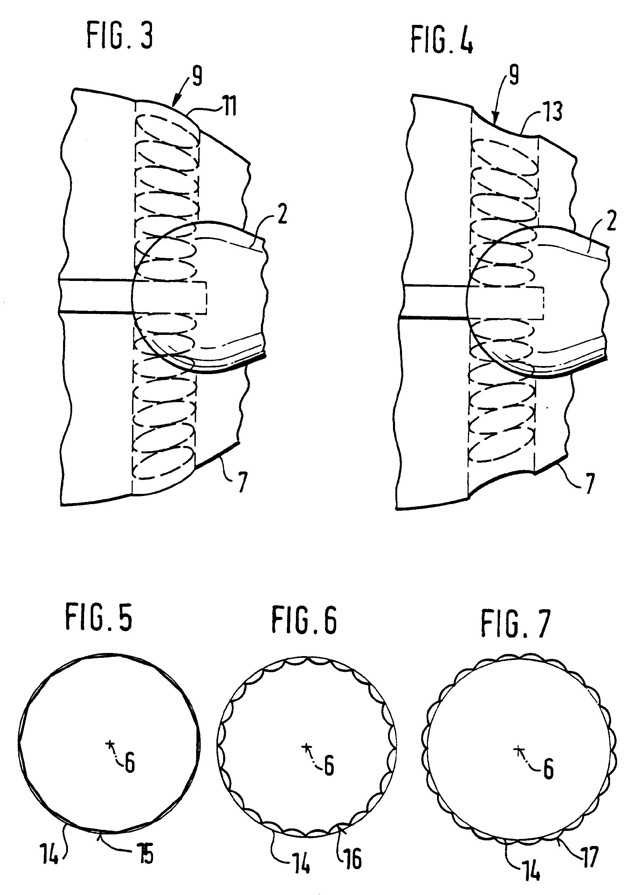

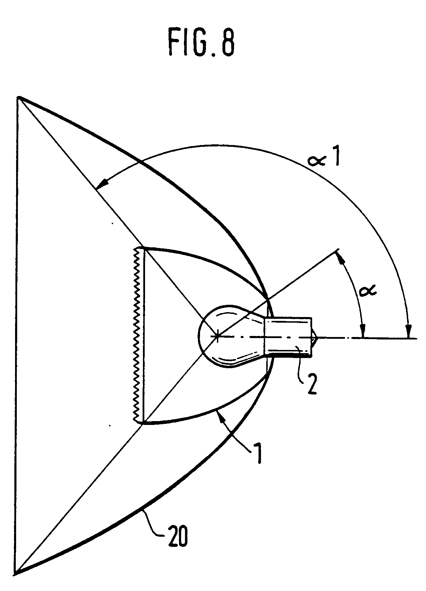

Zwei Ausführungsbeispiele der Erfindung sind in der Zeichnung anhand mehrerer Figuren dargestellt und in der nachfolgenden Beschreibung näher erläutert. Es zeigt Figur 1 ein erstes Ausführungsbeispiel einer Leuchte als Längsschnitt, Figur 2 ein zweites Ausführungsbeispiel der Leuchte, Figur 3 den in Figur 2 mit III bezeichneten Ausschnitt mit einer ersten Variante der Leuchte, Figur 4 den Ausschnitt III mit einer zweiten Variante der Leuchte, Figur 5 eine dritte Variante der Leuchte im Querschnitt entlang Linie V - V in Figur 2, Figur 6 eine vierte Variante der Leuchte im Querschnitt, Figur 7 eine fünfte Variante der Leuchte im Querschnitt und Figur 8 die Leuchte im Vergleich mit einer Leuchte mit herkömmlichem Reflektor.

Beschreibung der Ausführungsbeispiele

Eine in Figur 1 dargestellte Leuchte besteht aus einem Reflektor 1, einer im Scheitelbereich des Reflektors 1 angeordneten Glühlampe 2 und einer die Lichtaustrittsöffnung des Reflektors 1 abdeckenden Streuscheibe 4. Die Glühwendel 3 der Glühlampe 2 ist im Brennpunkt F des Reflektors 1 angeordnet.

In einem in Figur 1 dargestellten ersten Ausführungsbeispiel der Leuchte entsteht der Reflektor 1 durch die Rotation eines um einen Winkel $\gamma$ um den Brennpunkt F des Reflektors 1 gedrehten, die Mantellinie des Reflektors 1 bildenden Parabelasts 7, im folgenden kurz Parabel 7 genannt, um eine optische Achse 6 des Reflektors 1. Der Brennpunkt F des Reflektors 1 ist dabei zugleich Brennpunkt der Parabel 7. Da die Parabel 7 um den Brennpunkt F um den Winkel $\gamma$ gedreht ist, tritt das Licht, am Beispiel eines Lichtstrahls 8 dargestellt, nicht parallel zur optischen Achse 6 aus dem Reflektor 1 aus, sondern unter dem Winkel $\gamma$ geneigt. Die Streu-

2

scheibe 4 ist als eine Ringlinse ausgebildet, die die Lichtstrahlen 8 parallel zur optischen Achse 6 richtet.

In einem in Figur 2 dargestellten zweiten Ausführungsbeispiel der Leuchte ist die Parabel 7 in einem Abschnitt 9, aus dem Licht in den mittleren Bereich 12 der Streuscheibe 4 reflektiert wird, durch andere Kurventeile ersetzt. Der Abschnitt 9 ergibt sich, indem vom mittleren Bereich 12 der Streuscheibe 4 unter dem Winkel $\gamma$ zur optischen Achse 6 geneigte Lichtstrahlen 8a, 8b zum Reflektor 1 gelegt werden. Die den Reflektor 1 bildene Parabel 7 ist im Abschnitt 9 durch eine Gerade 10 ersetzt, so daß hier bei Drehung der Parabel 7 um die optische Achse 6 ein Teilkegelmantel gebildet wird.

In einer in Figur 3 dargestellten ersten Variante ist die Parabel 7 durch eine von der optischen Achse 6 weggewölbte Kreislinie 11 und in einer Figur 4 dargestellten zweiten Variante durch eine zur optischen Achse 6 hingewölbte Kreislinie 13 ersetzt.

Durch den Ersatz der Parabel 7 durch andere Kurventeile wird erreicht, daß die Lichtstrahlen, die in dem Abschnitt 9 reflektiert werden, sich nicht mehr in der Ebene der Streuscheibe 4 treffen. Dadurch tritt im mittleren Bereich 12 der Streuscheibe 4 keine Konzentration von Lichtstrahlen auf und es entstehen keine hohe Temperaturen, die die Streuscheibe 4, wenn diese aus Kunststoff hergestellt ist, zum Schmelzen bringen können.

In einer in Figur 5 dargestellten dritten Variante ist die in einem Querschnitt senkrecht zur optischen Achse 6 kreisförmige Umfangslinie 14 des Reflektors 1 in dem Abschnitt 9 in kurze Geradenstücke 15 unterteilt, so daß im Abschnitt 9 der Reflektor 1 durch ebene Facettenteile gebildet wird.

In einer in Figur 6 dargestellten vierten Variante ist die Umfangslinie 14 in kurze, zur optischen Achse 6 hingewölbte Kreislinie 16 und in einer in Figur 7 dargestellten fünften Variante in kurze, von der optischen Achse 6 weggewölbte Kreislinien 17 unterteilt, was in beiden Fällen entsprechend gewölbte Facetten ergibt. Durch die Unterteilung der Umfangslinie 14 wird eine weitere Temperaturabsenkung im mittleren Bereich 12 der Streuscheibe 4 erreicht.

Das die hohe Temperatur erzeugende Kreuzen der Lichtstrahlen, die vom Reflektor 1 reflektiert werden, beschränkt sich auf einen Bereich 18 innerhalb der Leuchte um die optische Achse 6 herum zwischen Glühlampe 2 und einem bestimmten Abstand von der Streuscheibe 4.

In Figur 8 sind eine Leuchte mit einem herkömmlichen parabolischen Reflektor 20 und zum Vergleich die Leuchte mit dem von der gedrehten Parabel 7 gebildeten Reflektor 1 dargestellt. Beide Leuchten umfassen mit ihren Reflektoren 1 und 20 den gleichen Baumwinkel $\omega$. Der Raumwinkel $\omega$ ergibt sich aus dem in Figur 8 eingezeichneten Winkel $\alpha$, der durch den Durchmesser und den Abstand der Lampenöffnung 5 vom Brennpunkt F gegeben ist, und dem Öffnungswinkel $\alpha 1$ der Reflektoren zu:

$$\omega \;=\; 2\pi \,.\, (\cos\alpha \;-\; \cos\alpha 1)$$

Bei gleichen Glühlampen erfassen die beiden Reflektoren 1 und 20 den gleichen Lichtstrom, da dieser nur von der Lichtstärke der Glühlampe und dem umfaßten Raumwinkel $\omega$ nach der Gleichung:

$$\Phi \;=\; \omega \,.\, I$$

abhängt. In Figur 8 wird die raumsparende Bauweise der erfindungsgemäßen Leuchte deutlich.

Im folgenden wird die Berechnung des Reflektors 1 erläutert. Zur Berechnung des Reflektors 1 wird zunächst ein erstes Koordinatensystem festgelegt, dessen Achse Y mit der optischen Achse 6 zusammenfällt und dessen Achse X senkrecht zur Achse Y durch den Brennpunkt F des Reflektors 1 gehend, wie in Figur 1 dargestellt, angeordnet ist. Der Winkel $\gamma$, um den die Parabel 7 um den Brennpunkt F gedreht ist und unter dem das Licht 8 vom Reflektor 1 reflektiert werden soll, wird vorgegeben.

Der Radius R und der Abstand S der Lampenöffnung 5 sind durch die Abmessungen der Glühlampe 2 festgelegt. Somit ist ein erster Punkt P1 der Parabel 7 bekannt. Nun wird ein ebenfalls um den Winkel $\gamma$ um den Brennpunkt F gedrehtes zweites Koordinatensystem mit den Achsen Yd und Xd eingeführt. In diesem gedrehten Koordinatensystem werden die weiteren Punkte der Parabel 7 berechnet. Der Punkt P1 hat im ersten Koordinatensystem auf der Achse Y die Koordinate S und auf der Achse X die Koordinate R.

Die Koordinaten eines Punktes P im gedrehten Koordinatensystem Yd, Xd können in Abhängigkeit von dessen Koordinaten Y, X im ersten Koordinatensystem und dem Winkel $\gamma$ nach den folgenden, allgemein bekannten Transformationsgleichungen berechnet werden:

$$yd \;=\; \cos\gamma \,.\, ((\tan\gamma \,.\, x) \;+\; y)$$
$$xd \;=\; \cos\gamma \cdot (x \;-\; (\tan\gamma .\, y))$$

Mit den Koordinaten Y = S und X = R ergibt sich für den Punkt P1:

$$yd1 \;=\; \cos\gamma \,.\, ((\tan\gamma \,.\, R) \;+\; S)$$
$$xd1 \;=\; \cos\gamma \,.\, (R \;-\; (\tan\gamma \,.\, S))$$

Da das Koordinatensystem Yd, Xd mit der Parabel 7 um den Winkel $\gamma$ um den Brennpunkt F gedreht ist, liegt der Scheitelpunkt P2 der Parabel 7 auf der Achse Yd des gedrehten Koordinatenystems. Der Abstand f des Scheitelpunkts P2 vom Brennpunkt F, der als die Brennweite der Parabel 7 bezeichnet wird, kann nach folgender Gleichung berechnet werden:

3

$$f = yd2 = \frac{1}{2} \cdot (yd1 + \sqrt{(yd1)^2 + (xd1)^2})$$

Die allgemeine Gleichung einer Parabel im gedrehten Koordinatensystem lautet:

$$yd = a \cdot (xd)^2 + b$$

Die Koeffizienten a und b können durch Einsetzen der Koordinaten der bekannten Punkte P1 und P2 in die obige Gleichung zur Berechnung von Yd ermittelt werden. So ergibt sich für a und b:

$$a = -\frac{1}{2 \cdot f}$$

$$b = f$$

Damit lautet die Gleichung der Parabel 7 im gedrehten Koordinatensystem:

$$yd = -\frac{1}{2 \cdot f} \cdot (xd)^2 + f$$

Die Punkte der Parabel 7 können nun im gedrehten Koordinatensystem berechnet werden.

Mit den folgenden Rücktransformationsgleichungen können die Koordinaten der Punkte im ursprünglichen Koordinatensystem berechnet werden:

$$y = \sin\gamma \left[ \frac{(xd)^2}{-2 \cdot f} + f \right] + (Xd + SW) \cdot \cos\gamma$$

$$x = \cos\gamma \left[ \frac{(xd)^2}{-2 \cdot f} + f \right] + (Xd + SW) \cdot \sin\gamma$$

Für die Koordinate Xd ist dabei jeweils der Wert für den letzten berechneten Punkt einzusetzen. Von einem Punkt zum nächsten wird der Wert für Xd um eine frei wählbare, aber jeweils konstant zu haltende Schrittweite SW erhöht. Je kleiner die Schrittweite SW gewählt wird, desto genauer kann die Parabel 7 berechnet werden.

**Patentansprüche**

1. Leuchte, insbesondere für Kraftfahrzeuge, mit einer Lichtquelle (2), einem Reflektor (1), der von einem durch Drehung einer Kurve um eine optische Achse (6) des Reflektors (1) entstehenden Körper gebildet wird, wobei die die Mantellinie des Reflektors (1) bildende Kurve abschnittsweise durch einen Ast einer um einen Winkel $\gamma$ um einen vorgegebenen Brennpunkt F des Reflektors (1) gedrehten Parabel (7) besteht, dadurch gekennzeichnet, daß die Lichtaustrittsöffnung des Reflektors (1) mit einer lichtlenkenden Scheibe (4) abgedeckt ist, durch die das vom Reflektor (1) kommende Licht im wesentlichen parallel zur optischen Achse (6) gerichtet wird und daß die die Mantellinie des Reflektors (1) bildende Kurve in einem Abschnitt (9) des Reflektors (1), aus dem Licht in einen mittleren Bereich (12) der Scheibe (4) reflektiert wird, von der Parabel (7) abweicht.

2. Leuchte nach Anspruch 1, dadurch gekennzeichnet, daß die Parabel (7) im Abschnitt (9) durch eine Gerade (10) ersetzt ist.

3. Leuchte nach Anspruch 1, dadurch gekennzeichnet, daß die Parabel (7) im Abschnitt (9) durch gewölbte Kreislinien (11, 13) ersetzt ist.

4. Leuchte nach einem der Ansprüche 1 bis 3, dadurch gekenneichnet, daß im Abschnitt (9), die in einem Schnitt senkrecht zur optischen Achse (6) kreisförmige Umfangslinie (14) des Reflektors (1) durch kurze, von dieser kreisförmigen Umfangslinie (14) abweichende Linienzüge (15, 16, 17) ersetzt ist, unter Bildung von sich über den Abschnitt (9) erstreckenden Facetten.

5. Leuchte nach Anspruch 4, dadurch gekennzeichnet, daß die Linienzüge Geradenstücke (15) sind.

6. Leuchte nach Anspruch 4, dadurch gekennzeichnet, daß die Linienzüge Kreisbogenstücke (16, 17) sind.

## Claims

1. Light, in particular for motor vehicles, having a light source (2), a reflector (1) which is formed by a body arising by means of rotation of a curve around an optical axis (6) of the reflector (1), sections of the curve forming the generating line of the reflector (1) consisting by [sic] a branch of a parabola (7) rotated by an angle γ around a predetermined focal point F of the reflector (1), characterized in that the light exit aperture of the reflector (1) is covered by a light-deflecting plate (4) by means of which the light coming from the reflector (1) is directed substantially in parallel to the optical axis (6) and in that in a section (9) of the reflector (1) from which light is reflected into a central region (12) of the plate (4), the curve forming the generating line of the reflector (1) deviates from the parabola (7).

2. Light according to Claim 1, characterized in that the parabola (7) is replaced in the section (9) by a straight line (10).

3. Light according to Claim 1, characterized in that the parabola (7) is replaced in the section (9) by arched circular lines (11, 13).

4. Light according to one of Claims 1 to 3, characterized in that in the section (9) the circumferential line (14), which is circular in a section perpendicular to the optical axis (6), of the reflector (1) is replaced by short continuous lines (15, 16, 17) which deviate from this circular circumferential line (14), forming facets which extend over the section (9).

5. Light according to Claim 4, characterized in that the continuous lines are straight pieces (15).

6. Light according to Claim 4, characterized in that the continuous lines are pieces of an arc of a circle (16, 17).

## Revendications

1. Projecteur notamment pour véhicule automobile comprenant une source lumineuse (2), un réflecteur (1) formé par un corps obtenu par la rotation d'une courbe autour de l'axe optique du réflecteur (1), la courbe constituant la génératrice du réflecteur (1) étant formée par un segment d'une branche d'une parabole (7) pivotée d'un angle γ autour du foyer prédéterminé F du réflecteur (1), caractérisé en ce que l'orifice de sortie de la lumière du réflecteur (1) est couvert par une optique (4) de direction de lumière, qui dirige la lumière venant du réflecteur (1) essentiellement de manière parallèle à l'axe optique (6) et en ce que la courbe qui forme la génératrice du réflecteur (1) diffère de la parabole 7 sur un segment (9) qui réfléchit la lumière dans la zone centrale (12) de l'optique (4).

2. Projecteur selon la revendication 1, caractérisé en ce que le segment (9) de la parabole (7) est remplacé par un segment de droite (10).

3. Projecteur selon la revendication 1, caractérisé en ce que le segment (9) de la parabole (7) est remplacé par des arcs de cercle (11, 13).

4. Projecteur selon l'une des revendications 1 à 3, caractérisé en ce que la courbe périphérique circulaire (14) du réflecteur (1), définie par une coupe perpendiculaire à l'axe optique (6) passant par le segment 9 est remplacée par des courbes (15, 16, 17) différentes de cette ligne périphérique circulaire (14) en formant des facettes s'étendant sur le segment (9).

5. Projecteur selon la revendication 4, caractérisé en ce que le tracé est constitué par des morceaux de droite (15).

6. Projecteur selon la revendication 4, caractérisé en ce que le tracé est constitué par des arcs de cercle (16, 17).

## FIG. 1

## FIG.2

# FIG. 3

# FIG. 4

# FIG. 5

# FIG. 6

# FIG. 7

# FIG.8